(19) Europäisches Patentamt
European Patent Office
Office européen des brevets

(11) EP 0 600 989 B1

(12) **EUROPEAN PATENT SPECIFICATION**

(45) Date of publication and mention
of the grant of the patent:
**16.12.1998 Bulletin 1998/51**

(21) Application number: **92917921.6**

(22) Date of filing: **07.08.1992**

(51) Int Cl.$^6$: **C02F 3/10**

(86) International application number:
**PCT/US92/06641**

(87) International publication number:
**WO 93/02971 (18.02.1993 Gazette 1993/05)**

(54) **PROCESS FOR REMOVAL OF ORGANIC POLLUTANTS FROM WASTEWATER**

VERFARHEN ZUR BESEITIGUNG ORGANISCHER SCHADSTOFFE AUS ABWASSER

PROCEDE SERVANT A ENLEVER DES POLLUANTS ORGANIQUES D'EAUX USEES

(84) Designated Contracting States:
**DE FR GB IE NL**

(30) Priority: **07.08.1991 US 741857**

(43) Date of publication of application:
**15.06.1994 Bulletin 1994/24**

(73) Proprietor: **AlliedSignal Inc.**
**Morristown, New Jersey 07962-2245 (US)**

(72) Inventors:
• **LUPTON, Francis, S.**
**Evanston, IL 60202 (US)**
• **SHERIDAN, William, G.**
**Glen Ellyn, IL 60137 (US)**

• **SURGI, Marion, R.**
**Illinois 60022 (US)**

(74) Representative: **Brock, Peter William**
**Urquhart-Dykes & Lord**
**1 Richfield Place**
**Richfield Avenue**
**Reading RG1 8EQ Berkshire (GB)**

(56) References cited:
**EP-A- 0 092 159      EP-A- 0 150 747**
**WO-A-86/04923**

• **BHOWMICK, A.K. 'handbook or elastomers' 1988 , MARCEL DEKKER , NEW YORK**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

1. Field of the Invention

This invention relates to a process for the removal of organic pollutants from waste water. More particularly, this invention relates to a process for removal of such pollutants especially substituted and unsubstituted phenols by aerobic biodegration using a porous biomass support system in a fixed bed reactor.

2. Prior Art

Various bioremediation processes are known. See for example, U.S. Patent Nos. 4,634,672; 3,904,518; 4,069,148; 4,681,851; 4,634,672; 2,812,031; and 3,617,531; and H.M. Ehrhardt and H.J. Rehm, Appl. Microbiol. Biotechnol., 21, 32-6 (1985); A. Morsen and H.J. Rehm, Appl. Microbiol. Biotechnol., 26, 283-8 (1987), Y.T. Wang, M.T. Suidan and B. E. Rittman, Journal Water Pollut. Control Fed., 58 227-33 (1986); P.Fox, M.T. Suidan, and J.T. Pfeffer, ibid., 60, 86-92 (1988, Givens and Sack, 42nd Purdue University Industrial Waste Conference Proceedings, pp. 93-102 (1987); J.A. Heidman, R.C. Brenner and H.J. Shah, J. of Environmental Engineering, 114, 1077-96 (1988); H. Bettmann and H.J. Rehm, Appl. Microbial. Biotechnol., 22, 389-393 (1985); A.M. Anselmo et al., Biotechnology B.L., 7, 889-894 (1985); G. Michael Alsop and Richard A. Conroy, "Improved Thermal Sludge Conditioning by Treatment With Acids and Bases", Journal WPCF, Vol. 54, No. 2 (1982), T. Calcutt and R. Frost, "Sludge Processing - Chances for Tomorrow", Journal of the Institute of Water Pollution Control, Vol. 86, No. 2 (1987); "The Municipal Waste Landfill Crisis and A Response of New Technology", Prepared by United States Building Corporation, P.O. Box 49704, Los Angles, CA 90049 (November 22, 1988); William J. Jewell "Anaerobic Sewage Treatment", Environ. Sci. Technol., Vol. 21, No. 1 (1987); See N.S. Battersby & V. Wilson. "Survey of the anaerobic biodegradation Potential of Organic chemicals in Digesting Sludge. " Applied & Environmental Microbiology, 55(2):p. 433-439, Feb. 1989; and J.M. Thomas, M.D. Lee, M.J. Scott and C. H. Ward, "Microbial Ecology of the Subsurface at an Abandoned Creosote Waste Site." Journal of Industrial Microbiology, Vol. 4, p. 109-120, 1989. EP-A-0092159 discloses a method for treating waste water with microorganisms supported on polyurethane foam particles. EP-A-0150747 teaches the benefit of using polyurethane (preferably hydrophilic polyurethane) with additives for the treatment of waste-containing liquids.

Although the disclosure of EP-A-0150747 (corresponding to US-A-4576718) mentions both hydrophilic and hydrophobic polyurethanes, and mentions many types of fillers, some hydrophobic and some hydrophilic, the latter are most generally used because of the importance of ensuring water absorption.

One embodiment of the present invention provides a process for the removal of organic pollutants from waste water comprising passing an aqueous feed stream of said waste water containing one or more organic materials through a reactor in the presence of a gas comprising an effective amount of oxygen, said reactor containing a biologically active biomass comprising a plurality of biologically active particles comprising a substrate and aerobic microorganisms to provide an effluent stream in which the concentration of at least one of said materials is less than the concentration of said material in said feed stream. According to the invention, the biologically active particles are hydrophobic particles comprising a hydrophobic polyurethane substrate in particulate form and an optional powdered activated carbon absorbent and an effective amount of one or more aerobic microorganisms capable of metabolizing at least one of said organic materials, being present on, in, or on and in, said substrate and/or said absorbent.

Another embodiment of the invention provides an apparatus for purification of waste water by aerobic biodegradation which comprises a reactor having an inlet for in flow of an aqueous influent stream containing one or more organic materials and an outlet for out flow of an effluent stream in which the concentration of at least one or said materials is less than the concentration of said material in said influent stream and having contained in said reactor a biologically active biomass. In this embodiment of the invention the biomass comprises a plurality of biologically active particles that are hydrophobic polyurethane particles comprising a hydrophobic polyurethane having an effective amount of aerobic microorganisms capable of metabolizing at least one of said organic materials in , on, or on and in, said hydrophobic polyurethane particles in the absence of a carbon absorbent.

Several advantages flow from the process of this invention. one unique advantage of this invention is that the process can be used to reduce relatively high levels of organic pollutants in the aqueous feed stream to relatively low levels in the absence of absorbants for the materials such as powdered activated carbon. Another advantage of this invention is that significant reductions in levels of organic contaminants contained in the effluent stream are obtained with reasonable hydraulic residence times as compared to prior art processes as for example, the process described in US-A-4,634,672 and 4,681,851. Yet another benefit which flows from this invention is that the aqueous stream being treated by the process contain relatively high levels of organic contaminants. Still another advantage of the process of this invention is that the process is relatively resistant to surges in the concentration of the organic materials in the feed stream or in other words upset.

BRIEF DESCRIPTION OF THE DRAWINGS

The invention will be more fully understood and further advantages will become apparent when reference is made to the following detailed description of the invention and the accompanying drawings in which:

Figure 1 is a cross-sectional side view of a vertical reactor for use in a preferred embodiments of the invention.

Figure 2 is a cross-sectional side view of a horizontal reactor for use in the process of this invention.

Figure 3 is a perspective view of a preferred biologically active particle for use in the process of this invention.

Figure 4 is a cross-sectional top view of a reactor for use in the process of this invention having a cascading design.

Figure 5 is a side cross-sectional view of the reactor of figure 4.

Figure 6 depicts the oxygenation system of the reactor of figure 5.

Figure 7 is a cross-sectional top view of a reactor for use in a preferred embodiment of this invention having baffles.

Figure 8 is a side cross-sectional view of the reaction of Figure 7.

Figure 9 is an adsorption curve measuring phenol adsorbed for hydrophilic and hydrophobic foams and the foams impregnated with carbon.

Figure 10 is an adsorption curve measuring phenol adsorbed for a hydrophilic foam and a carbon impregnated hydrophilic foam.

Figure 11 is an adsorption curve for hydrophobic foam and carbon impregnated hydrophobic foam.

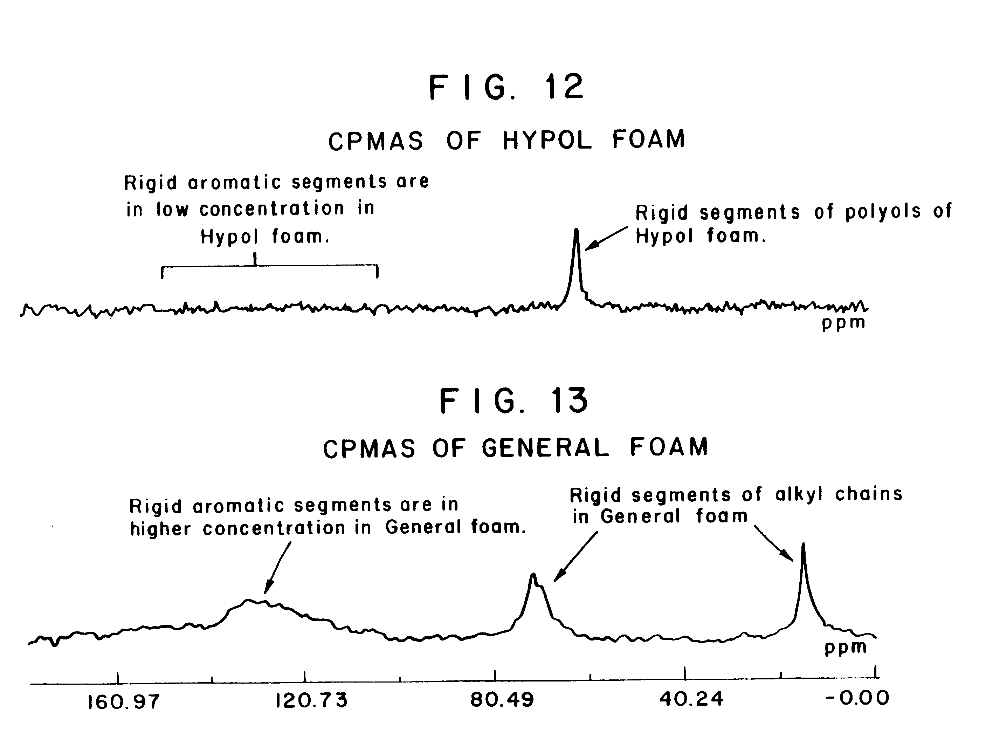

Figure 12 is a CPMAS $C^{-13}$ NMR a spectrum of a hydrophilic foam.

Figure 13 is a CPMAS $C^{-13}$ NMR spectrum of a hydrophobic foam.

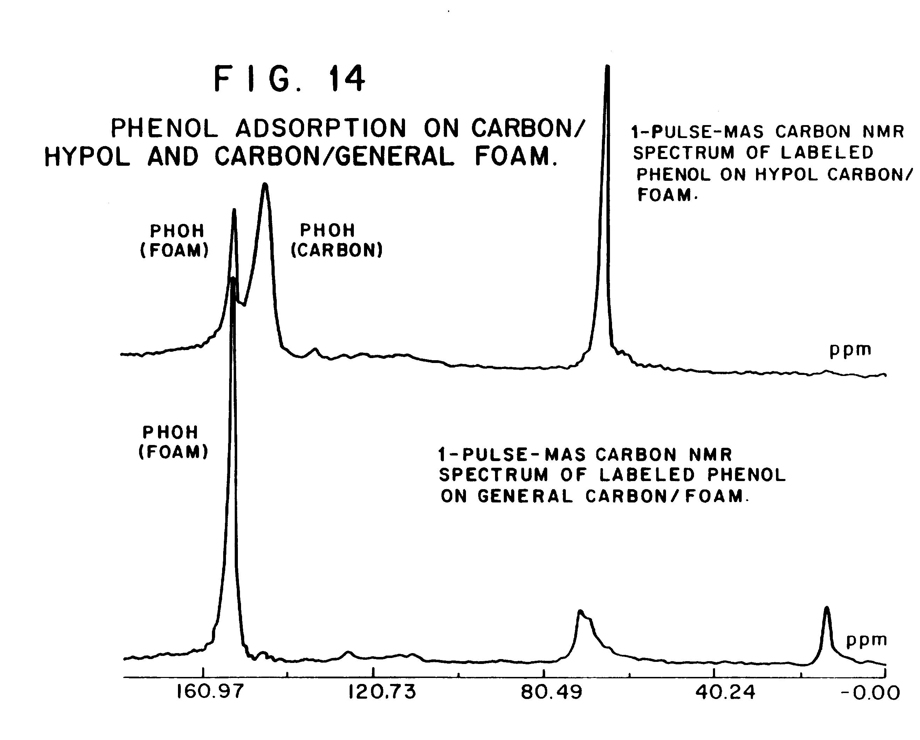

Figure 14 is a 1-pulse MAS $C^{-13}$ spectrum of carbon impregnated hydrophilic foam and carbon impregnated hydrophobic foam after exposure phenol.

DETAILED DESCRIPTION OF THE PREFERRED EMBODIMENTS OF THE INVENTION

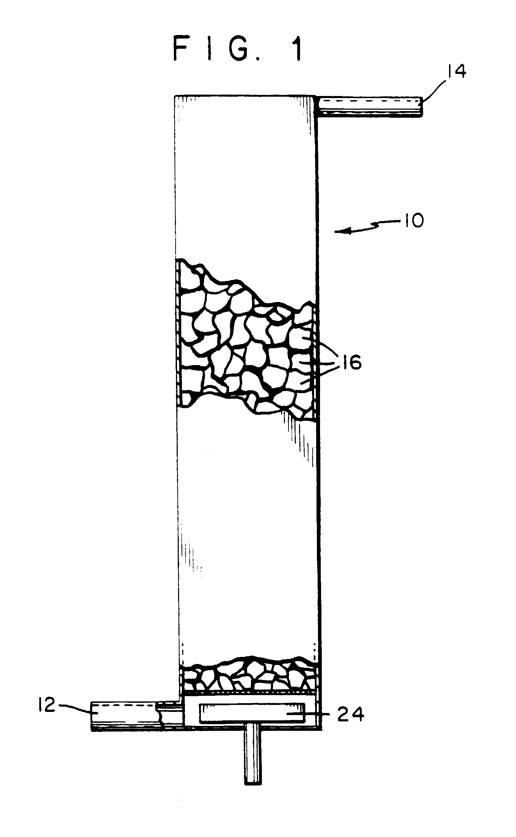

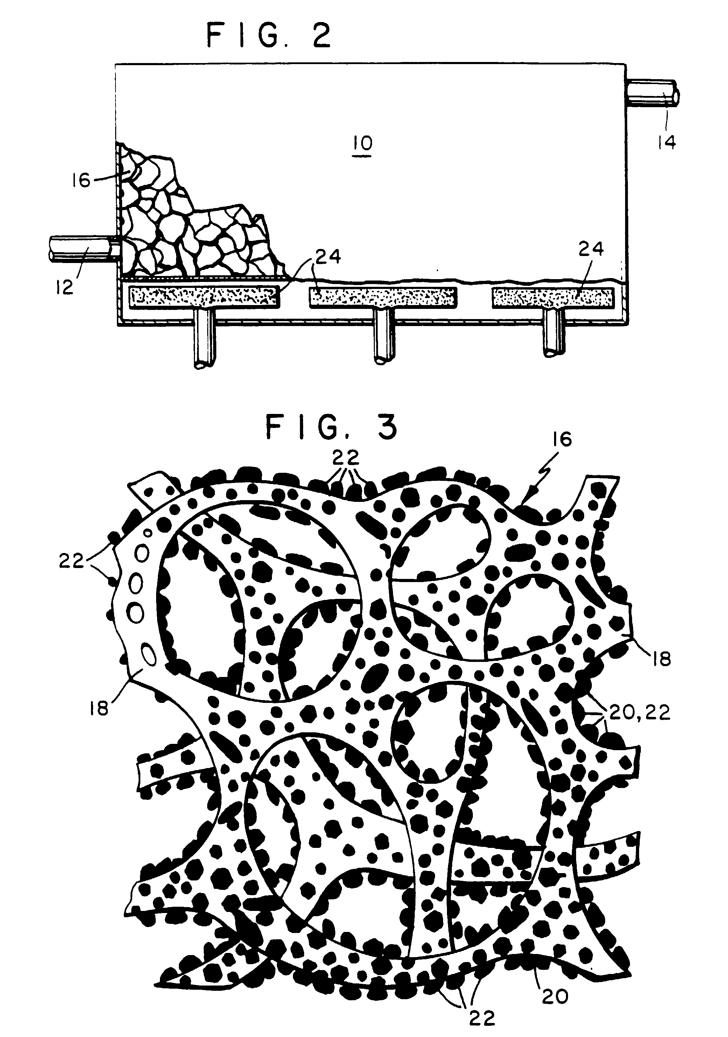

The present invention will be better understood by those of skill in the art by reference to the figures. Referring to figures 1 and 2, the numeral 10 indicates a reactor for use in the process of this invention. In FIGs. 1 and 2, reactor 10 is a fixed bed reactor which is employed in the preferred aspects of this invention. However, in the practice of this invention reactor design and configuration may vary widely and other reactor design such as stirred to tank, fluidized bed and the like may be conveniently used in the practice of this invention. In the process, an aqueous waste stream containing one or more organic materials is introduced into reactor 10 via inlet 12, passes through reactor 10 and exits the reactor via exit 14 in the presence of a gas comprising an effective amount of oxygen at a rate sufficient to reduce the concentration of at least one of the materials in the effluent stream to the desired levels. Reactor 10 contains a plurality of biologically active particles in a identified in figures 1 and 2 by the numeral 16. As depicted in Figure 3, biologically active particles 16 comprise a polymeric substrate 18, having one or more types of a particulate absorbents 20 for at least one of the materials contained in said aqueous stream in substrate 18, or on the surface of substrate 18 and in substrate 18. Biologically active particles 16 also include one or more types of aerobic microorganism 22 on, in or on and in substrate 18 and/or absorbent 20 which are capable of metabolizing at least one of the materials contained in the waste stream.

The process is carried out in the presence of a gas comprising an effective amount of oxygen. As used herein, an "effective amount of oxygen" is an amount of oxygen which is sufficient to supply the metabolic requirement oxygen for the micro-organisms metabolizing of the target pollutant. In general, the amount of oxygen distributed in the process feed stream is at least about 2 mg of oxygen per liter of aqueous feed. In the preferred embodiments of the invention, the amount of oxygen is from about 5 mg per liter of feed to about 10 mg per liter of feed and in the most preferred embodiments of the invention, the amount of the oxygen is from about 6 mg/liter of feed to about 8 mg/liter of feed.In the preferred embodiments of this invention, the gas is distributed uniformly or substantially uniformly throughout all or a portion of the biologically active biomass. The manner in which the gas is introduced into reactor 10 may vary widely. The gas may be introduced into reactor 10 employing conventional methods. For example, in the vertical or up-flow reactor 10 of Figure 1, the gas is introduced into reactor 10 with the aqueous feed stream at the bottom of the reactor 10 through use of sparger 24 which introduces the gas in the form of small diameter gas bubbles. Supplemental gas can be introduced, if required, at various points along the vertical length of reactor 10 (not depicted in the drawing). In the embodiment of the invention in which reactor 10 is a horizontal reactor as for example the reactor of Figure 2, the gas can be introduced along the horizontal length of reactor 10 at various points to achieve a substantially uniform distribution of the gas in the feed stream in reactor 10. In this embodiment, the up-flow of the gas is orthogonal or substantially orthogonal to the direction of the flow of the aqueous feed stream. In the most preferred embodiments of the invention, reactor 10 is in a horizontal configuration in which the gas is distributed uniformly or substantially uniformly throughout all or substantially of reactor 10. In these most preferred embodiments,the gas is introduced into reactor 10 along the horizontal length of reactor 10 as depicted in figure 2. In this mode, a more uniform distribution of the gas in the feed stream is achieved.

In the most preferred embodiments of the invention, the length of reactor 10 is greater than the height of reactor 10 and the ratio of length of reactor 10 to the height of reactor 10 is selected to achieve the desired distribution of gas in reactor 10. In general, the height of reactor 10 is from about 0.5 m to about 8 m and the ratio of length to height is from about 7:1 to about 2:1. In the preferred embodiments of the invention, the height of reactor 10 is from about 1 m to about 6 m and the ratio of length to height is from about 6:1 to about 3:1; and in the particularly preferred embodiments of the invention, the height of reactor 10 is from about 2 m to about 5 m and the ratio of length to height is from about 5:1 to about 3:1. Amongst these particularly preferred embodiments of the invention, most preferred ar those embodiments in which the height of the reactor is from about 2.5 m to about 4.5 m and the ratio of length to height is from about 4:1 to about 5:1.

Process temperatures may vary widely and will depend on the particular microorganisms chosen for use. In general, the process is carried out at a temperature sufficiently high so as to not unduly interfere with the metabolism of the microorganism and sufficiently low as to not kill the microorganism. Process temperatures are usually from about 5° C to about 65° C. Process temperatures are preferably in the range of from about 15° C to about 65° C, more preferably in the range of from about 20° C to about 40° C and most preferably in the range of from about 25° C to about 35° C.

The aqueous organic pollutant-containing stream is treated in the process of this for a time sufficient to reduce concentration levels of at least one of the pollutants in the effluent stream the desired extent. In general, with aqueous feed streams in which the concentration levels of at least one pollutant is equal to or less than about 5000 ppm a hydraulic residence time of less than about 30 hours, preferably less than about 24 hours, and more preferably less than about 15 hours, suffices to attain a concentration for at least one pollutant in the effluent stream to equal to or less than about 22 parts per million, more preferably equal to or less than about 1 ppm, and most preferably equal to or less than about 0.1 ppm. An effluent concentration of equal to or less than about 0.02 ppm is the concentration of choice.

The process of this invention results in relatively low sludge production as measured by the test procedure "209°C Total Suspended Solids Dried at 103-105°C" described in <u>Standard Methods For The Examination of Water and Wastewater,</u> 10th Edition published by American Pablic Health Association, 1015 Fifteenth Street NW, Washington, DC 20025 pp. 96 and 97. After 120 days of continuous or substantially continuous operation, the amount of suspended sludge in the effluent stream is generally equal to or less than about 600 mg/L, preferably is equal to or less than about 400 mg/L, more preferably equal to or less than about 200 mg/L, and most preferably equal to or less than about 100 mg/L.

The aqueous waste streams which may be treated in the process of this invention and the organic pollutants contained in such streams may vary widely. The only requirement is that at least one of the pollutants can be degraded or metabolized by an aerobic microorganism. Illustrative of such pollutants are phenolic materials such as phenol, the cresols, resorcinols, catechol, halogenated phenols as for example, 2-chlorophenol, 3-chlorophenol, 4-chlorophenol, 2,4-dichlorophenol, pentachlorophenol, nitrophenols as 2-nitrophenol and 4-nitrophenol and 2,4-dimethylphenol. Another important class of organic pollutants consists of aromatic hydrocarbons, such as benzene, toluene, the oxylenes, ethylbenzene, and so forth. Polynuclear aromatic hydrocarbons are an important subclass as represented by naphthalene, anthracene, chrysene, acenaphthylene, acenaphthene, phenanthrene, fluorene, fluoranthene, naphthacene, and pyrene. Still other pollutants are halogenated alkanes such as trichloroethane and the like.

The concentration of organic pollutants in process streams treatable in the process of this invention are "biologically treatable levels". As used herein, "biologically treatable levels" are pollutant concentrations which do not inhibit or excessively inhibit the metabolism of the pollutants by the microorganism. In general, the concentration of pollutants in the aqueous streams is equal to or less than about 5000 ppm. Obviously, the lower concentration is not critical and does not represent a limitation on the process. The concentration of organic pollutants is preferably equal to or less than about 4000 ppm, more preferably equal to or less than about 3000 ppm and most preferably and most preferably is equal to or less than about 2000 ppm, with a pollutant concentration of equal to or less than about 500 ppm being being the concentration level of choice.

The pH of the pollutant-containing feed may need to be adjusted for optimum biodegradation. In general, the pH is within the pH range allowing metabolism of the target pollutant(s). In the preferred embodiments of the invention, the pH of the feed is from about 6 to about 9, and in the most preferred embodiment of the invention, the pH of the feed is from about 6.5 to about 7.5.

Nutrients may need to be provided. Such materials may be added through use of known additives such as fish meal peptine, soybean flour, peanut oil, cotton seed oil, and usually salts capable of providing phosphate, sodium, potassium, ammonium, calcium, sulfate, chloride, bromide, nitrate, carbonate or like ions. Usually sufficient amounts often are present in the aqueous feed to satisfy minimum requirements of the microorganism.

The aqueous feed stream is introduced into reactor 10 employing conventional means and is passed through the reactor employing an "effective hydraulic retention time". As used herein, an "effective hydraulic retention time" is a time which is sufficient for the process to reduce the concentration of pollutants in the effluent stream to the desired levels. Hydraulic retention times are preferably equal to or less than about 36 hrs, more preferably from about 10 to about 36 hrs and most preferably from about 10 to about 24 hrs.

The type of reactor 10 used in the process of this invention is not critical in providing the advantages of this invention. Any reactor design including stirred tank, fixed bed and fluidized bed may be used. In the preferred embodiments of the invention, reactor 10 is a fixed bed reactor or substantially a fixed bed reactor. As used herein a "fixed bed reactor" is a reactor in which the plurality of biologically active particles are stationary or substantially stationary as the feed flows through the reactor. Also, in the preferred embodiments of the invention were reactor 10 is a fixed bed reactor, the length of the path traversed by the aqueous stream as it passes through the reactor and the width of the stream are such that reactor 10 has preferably "plug flow characteristic" or substantially "plug flow characteristics". As used herein, the "plug flow characteristics" are achieved when all or substantially all of the mixing in reactor 10 occurs in the plane perpendicular to or substantially perpendicular to the plane of feed flow and there is no or substantially no mixing in the plane of feed flow. See Ed Shroeder, "Waste Water Treatment", McGraw Hill, (1980).

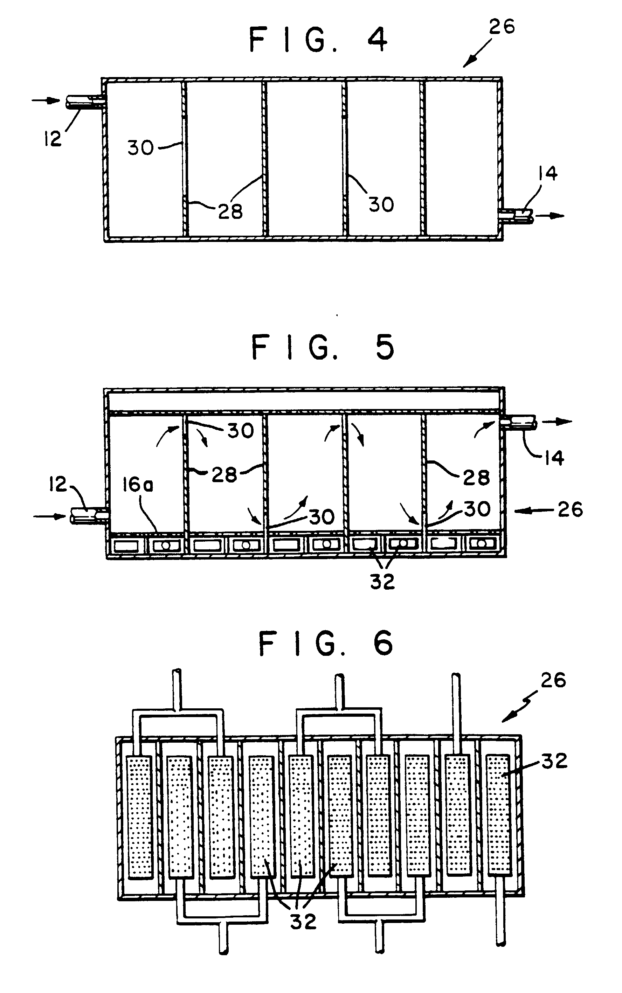

In general, plug flow can be achieved in a number of ways, all of which can be utilized in the practice of the preferred embodiments of this invention. For example, in reactor 10 of figures 1 and 3, plug flow is achieved in a vertical or horizontal reactor with a relatively high reactor length to reactor width ratio, such as a length to width ratio of at least about 2 to 1, in which the length of reactor 10 is in the direction of feed flow, and the width of the reactor is perpendicular to the direction of feed flow. In reactor 10 of figures 1 and 3, the length of the reactor is the length of the path traversed by the feed stream as it passes through reactor 10 and the width of reactor 10 is the width of the stream. However, the actual length and the actual width of reactor 10 need not be equal to the length and width of the feed stream and the desired length to width ratio can be achieved by other means. Examples of these alternative embodiments are set forth in Figures 4 to 8. In Figures 4, 5 and 6 is depicted a reactor 26 having a segmented design to achieve plug flow characteristics, corresponding parts being referred to by the like numerals as in the reactor of Figures 1 and 2. Reactor 26 is of a cascade design and includes inlet 12 and outlet 14. The length of the path traversed by the feed stream is lengthened through use of a plurality of cascades 28 which extend perpendicular to the length of reactor 26. As the feed passes through reactor 26, it traverses reactor 26 both horizontally and vertically along the length of a first cascade 28, through opening 30 and along the length of the next adjacent cascade 28 until the aqueous stream exits reactor 26 through opening 14. This design eliminates or substantially eliminates back mixing between the sections defined by the walls of adjacent cascades 28. The minimum number of sections required to achieve the desirable plug-flow conditions and performance efficiency is about four. However, more sections can be incorporated into reactor 26 which would result in greater plug-flow characteristics. From a practical and economic point of view, usually not more than ten sections are used. To provide for uniform or substantially uniform distribution of the gaseous composition in reactor 26, reactor 26 includes a plurality of gaseous sparging units 32 along its horizontal length at the bottom of reactor 26.

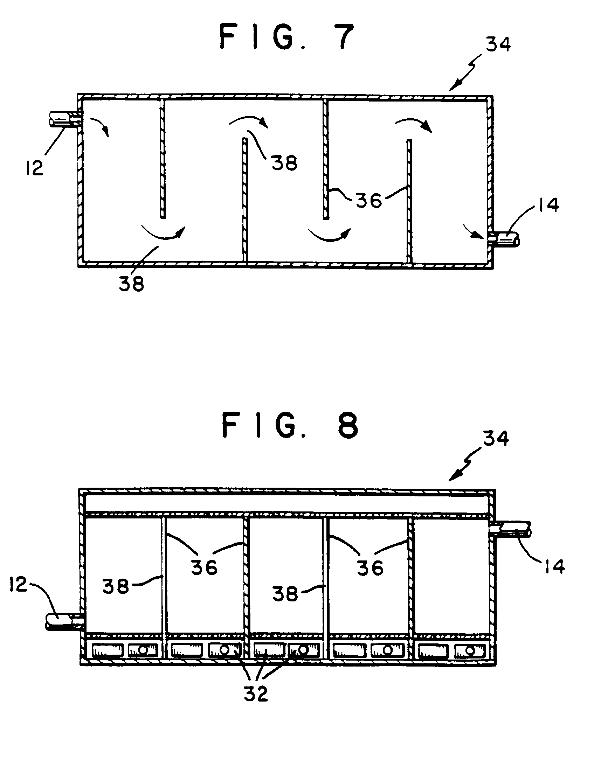

Figures 7 and 8 show a fixed bed reactor 34 which differs from reactor 26 of Figures 4 to 6 in that the length of the path traversed by the feed stream as it traverses reactor 34 is increased through the use of baffles 36, corresponding parts being defined by like numerals. The feed stream is introduced in reactor 34 at inlet 12. As the feed stream passes through the reactor 34, it traverses both the horizontally along the length of each baffle 36, through opening 38 along the length of the next baffle 36 and through the next opening 38 and so on along the length of each subsequent baffle 36 and through each subsequent opening 38 until the feed stream exits reactor 34 through outlet 14. As in the case of reactor 26, a uniform distribution or substantially uniform distribution of gas is achieved by sparging units 32 along the horizontal length of reactor 34.

The ratio of length of the feed stream to width of the stream in the preferred fixed bed reactor is at least about 2:1. In the more preferred embodiments of this invention, the ratio of length of the feed stream to width of the feed stream is from about 2:1 to about 15:1. In the particularly preferred embodiments of the invention, the ratio of length of the feed stream to width of the feed stream is from about 3:1 to about 10:1. In the most preferred embodiments of this invention, the ratio of length of the feed stream to width of the feed stream is from about 5:1 to about 8:1.

The biologically active composition for use in the process of this invention comprises a plurality of biologically active particles 16. As depicted in Figure 3, in the preferred embodiments of this invention particles 16 comprise a hydrophobic polyurethane substrate 18, and having aerobic micro-organisms 22 (which are capable of growth and of metabolizing at least one of the organic pollutants) on, in or on and in substrate 18 in the absence of a carbon absorbent for one or more of the organic material pollutants in or on and in the hydrophobic polyurethane substrate.

Microorganisms 22 used in the practice of this invention, are aerobic microorganisms selected to degrade the target pollutants in ways well known to those of skill in the art. Useful microorganisms 22 may vary widely and may be naturally occurring microorganisms 22 or may be genetically engineered microorganisms 22. The only requirement is that microorganisms 22 are aerobic and are capable of metabolizing the target pollutant(s) to the required effluent levels over the required period of time. In the preferred embodiments of the invention, microorganism 22 are obtained from the pollutant-containing waste stream or from soil which has been in contact with the waste stream.

In the operation of the process, the cell content of microorganisms 22 is an amount which is sufficient to reduce the organic pollutant content to the desired concentration level within the desired hydraulic retention time. Of course, initially it is only necessary to inoculate substrate 18 with an amount of microorganisms 22 to result in an operative amount of microorganisms 22 within a reasonable period of time. In the preferred embodiments of the invention, cell content of microorganisms 22 is at least about 0.3% by weight based on the total weight of microorganisms 22, and substrate 18, and in the most preferred embodiments of the invention is from about 0.3% by weight to about 15% by weight on the aforementioned basis. Among these particularly preferred embodiments most preferred are those embodiments in which the cell content of microorganisms 22 is from about 0.5 to about 10% by weight based on the total weight of microorganisms 22 and substrate 18, with a content of from about 0.8 to about 5% by weight on the aforementioned basis being the amount of choice.

Substrate 18 used in the practice of this invention is in particulate form. The size and shape of substrate 18 can vary widely in longitudinal dimension of length and traverse dimensions of thickness, width and diameter. For example, substrate 18 may be in particulate form of regular shape such as cubular, rod shaped, rectangular, spherical, hexagonal or the like,, or may be of irregular shape. The particle size (length, thickness, width and/or diameter) may vary widely and is preferably from about 0.25 cm (0.10 in.) to about 7.6 cm (3 in.) More preferred particle sizes are from about 0.5 cm (0.2 in.) to about 5 cm (2 in.), and most preferred particle sizes are from about 1.3 cm (0.50 in.) to about 2.5 cm (1 in.) with a particle size of from about 1.3 cm (0.50 in.) to about 1.9 cm (0.75 in.) being the particle size of choice.

In the preferred embodiments of the invention, where all or a portion of microorganisms 22 and absorbent 20 are incorporated in substrate 18, substrate 18 is preferably an open cell material having a relatively high macro porosity, as for example a foam. This allows the pollutant-containing aqueous feed to flow through the interior of the substrate. In the preferred embodiments of the invention, substrate voids are at least about 2 millimeters, and preferably are on the order of from about 5 to about 6 millimeters in size. Substrate 18 also needs to be resistant to the shear forces and abrasion present in a reactor, and should have good crush strength. In these preferred embodiments of the invention, substrate 18 is preferably semiflexible, with a density of under about 0.032 g/cm$^3$ (2 pounds per cubic foot) for optimum economic feasibility. However, higher density substrates, of from about 0.064 g/cm$^3$ to about 0.08 g/cm$^3$ (about 4 to about 5 pounds per cubic foot) or even higher, are usable. It should be realized that substrate density is related to the economics of the invention and not to its performance; the invention may be practiced with a large range of substrate densities, even if certain ranges may present distinct economic advantages.

The material used to form substrate 18 is critical and is a "hydrophobic polyurethane". As used herein, "hydrophobic polyurethanes" are family of polymers containing repeat urethane groups of the formula:

$$-N(H)C(O)O \text{ - or --}N(H)C(NH)O-$$

preferably of the formula:

$$-N(H)C(O)O$$

Hydrophobic polyurethane are those which cannot be wetted by water. That is, a droplet of water on the surface of the polyurethane has an angle of contact of greater than 0° and preferably greater than about 90° as measured by a goniometer. The use of a hydrophobic polyurethane is critical to providing the advantages of this invention. Surprisingly, it has been discovered that hydrophobic polyurethanes adsorb certain organic pollutants such as phenol; thus enhancing the effectiveness of the microorganism that metabolizes the pollutant.

In the preferred embodiments of the invention, hydrophobic polyurethanes are those in which the molar ratio of carbon and hydrogen atoms to oxygen and nitrogen atoms in the polymeric backbone is greater than 1.4. The upper level of hydrophobicity of the polyurethane is not critical and in general hydrophobic polyurethanes having higher hydrophoblicities are preferred. Preferably the molar ratio of carbon and hydrogen atoms to oxygen and nitrogen atoms is preferably equal to or greater than about 2.0, more preferably equal to or greater than about 2.5 and most preferably equal to or greater than about 3.0. Illustrative of such useful and preferred polyurethanes are those derived from reaction of polyisocyanates such as diphenyl methane diisocyanate, hexamethylene 1,6-diisocyanate, dicyclohexylmethane diisocyanate, 1,5-naphalene diisocyanate, p-phenylene diisocyanate, m-phenylene diisocyanate, 2,4-toluene diisocyanate, 4,4'-diphenylmethane diisocyanate, 3,3'-dimethyl-4,4'-diphenylmethane diisocyanate, 3,3'-dimethyl-4,4'-biphenyl diisocyanate, 4,4'-diphenylisopropylidiene diisocyanate, 3,3'-dimethyl-4,4'-diphenyl diisocyanate, 3,3'-dimethyl-4,4'-diphenylmethane diisocyanate, 3,3'-dimethoxy-4,4 '-biphenyl diisocyanate, dianisidine diisocyanate, tolidine diisocyanate, 4,4'-diisocyananodiphenylmethane and the like and polyols and polyamides such as glycerin, trimethylolpropane, 1,2,6-hexanetriol, methyl glycoside, pentaerythritol, sorbitol, sucrose, ethylene glycol, diethylene glycol, hydroxy terminated polyesters formed by direct esterification of dicarboxylic acid with an excess of a difunctional alcohol such as poly(tetramethylene adipate), poly(ethylene adipate), poly(1,4-butylene adipate), poly(1,5-pentylene adipate), poly(1,3 butylene adipate), poly(ethylene succinate), poly(2,3-butylene succinate), polyether diols such as those prepared by reaction of a compound having active hydrogens such as dialcohols, polyalcohols, diphenols, polyphenols, aliphatic diamines or polyamines and aromatic diamines or polyamines with alkylene oxides such as styrene oxide, butylene oxide, propylene oxide, epichlorohydrin or mixtures of these alkylene oxices, ethylene diamine, diethylene triamine, 4,4-phenylmethane diamine.

In the practice of the preferred embodiments, the hydrophobic polyurethane is formed by reaction of aromatic polyisocyanates such as 2,4-tolylene diisocyanate, 2,6-tolylene diisocyanate, 4,4'-diphenylmethane diisocyanate, polyisocyanates derived from aniline-formaldehyde condensates, 1,6-hexamethylene diisocyanate and 4,4'-dicyclohexylmethane diisocyanate more preferably aromatic diisocyanates such 2,4-tolylene diisocyanate, 2,5-tolylene diisocyanate and mixtures thereof with a poly(oxyalkylene polyol) or a poly(ester polyol), more preferably a poly(alkylene oxy)polyol such as (poly propyleneoxypolyol) poly(ethyleneonypolyol) and mixtures. In the preferred embodiments of the invention, aromatic isocyanates and/or polyols having a larger ratio of carbon and hydrogen to oxygen such as those polyols which contain increased carbon atoms such as poly(propylene ether) glycol and other polyols having pendant aliphatic groups. In the preferred embodiment, it is preferred to increase the amount of aromatic groups, specifically aromatic isocyanate compounds, in the hydrophobic polyurethane foam in order to enhance the hydrophobic characteristic of the polymer. Preferably, the hydrophobic moieties derived from one or more types of polyurethane contains more than about 15% by weight of an aromatic isocyanate and less than about 85% by weight of a moiety derived from one or more types of poly(alkylene ether) glycol wherein at least about 40% by weight of the diol derived moieties are derived from such glycols where the alkylene repeat units include more than three carbons atoms especially poly(propylene oxide). Among these preferred embodiments of the invention, more preferred are those embodiments in which the hydrophobic polyurethane has at least about 50% by weight of poly (alkylene ether) glycol and more than about 20% by weight of aromatic diisocyanate. In particular preferred embodiments, the polyol content of the hydrophobic polyurethane is at least about 80% by weight of which less than about 60% by weight is poly(ethylene ether) glycol, and the diisocyanate content is less than about 25% by weight of aromatic diisocyanate. In the more particularly preferred embodiments of invention, the polyol content is greater than about 70% by weight polyethylene oxide and the diisocyanite content is less than about 30% by weight of aromatic diisocyanate.

The amount of substrate 18 included in the biologically active particles 16 may vary widely. In general, the amount of substrate 18 is from about 50 to about 95 weight percent based on that total weight of biologically article particle 16. In the preferred embodiments of the invention, the amount of substrate 18 is from about 60 to about 90 weight percent based on the total weight of particle 16, and in the particularly preferred embodiments is from about 70 to about 85 weight percent on the aforementioned basis.

The most preferred polymeric substrate material in the present invention is a flexible open-celled foams with a high permeability to water. The foam used in the practice of this invention must accommodate feed flow in the fixed bed configuration. To this end, it is important that the foam has a highly interconnected porosity where the foam voids desirably are at least about 2 millimeters and can range up to about 10 millimeters or more in size.

The voids preferably are on the order of from about 5 to about 6 millimeters in size. The foam is desirably semi flexible with a density of under about 0.032 g/cm$^3$ (2 pounds per cubic foot). However, higher densities of from about 0.064 g/cm$^3$ to about 0.112 g/cm$^3$ (about 4 to about 7 pounds per cubic foot) or even higher are usable. Foam density is related to the economics of the invention and not performance and the invention may be practiced with a large range of foam density. The chemical nature of the foam is a relatively unimportant aspect of the invention so long as the foam is open-celled with void characteristics as described above and is suitable for use in a fixed bed reactor over extended periods of time and can be impregnated with appropriate microorganisms without being lethal. Flexible and semi-flexible polyether based polyurethane foams having an open-cell structure are preferred for the practice of this invention. Although flexible and semi-flexible open-celled polyurethane foams are preferred substrates it is understood that the present invention includes rigid polyurethane and other foams having an open-celled structure which can also be impregnated with particulate absorbents.

Following impregnation of the porous polyurethane support with activated carbon, the biomass support substrate so produced is then cut into an appropriate particle size and loaded as a fixed bed into a reactor. A suspension of pollutant degrading microbes is then added to the reactor. The biodegradative microbes absorb and attach on, in or on and in the activated carbon impregnated porous polyurethane supports through natural processes well known in the art.

The following examples are merely illustrative and representative of our invention which is of considerably larger scope. These examples should not be considered limiting in any way.

Example 1

A series of experiments were carried out to compare the adsorptive capacity for phenolic pollutants of a hydrophilic polyurethane foam and a hydrophobic polyurethane foam. The hydrophilic polyurethane selected for evaluation was a polyurethane foam (hypol) obtained from W.R. Grace with a low degree of toluene diisocyanate cross-linking, a polyether diol (ethylene oxide content of greater than 90% by weight and the remainder propylene oxide) and a toluene diisocyanate content of less than 15% by weight. The hydrophobic polyurethane foam selected for evaluation was obtained from General Foam under a trade designation 1300 series with high degree of cross-linking, a polyol content of less than about 80t by weight (50% by wgt. ethylene oxide/50% by wgt. propylene oxide) of less and toluene diisocyanate content of approx. materials 25% to 35% by weight obtained from General Foam. The foams had approximately 30 to 60 pores per inch of varying sizes. The absorption coefficient of the polyurethanes were determined by the addition of a 1.0 g foam block (approximately 1/2 inch (1.27 cm) cubes) into 100 ml of a solution of phenol (0.1 g/l) in distilled water. After about 12h, the block was removed and the amount of phenol remaining in the solution was determined by colorimetry. The amount of phenol absorbed on the lock was also determined by colorimetry. The absorption coefficient can then be calculated as follows:

$$ACE = \frac{GPR/GW}{GPR/GA}$$

where:
"ACE" is the absorption coefficient, "GPR" is the grams of phenol remaining in the solution, "GW" is grams of water in the solution and "GA" is grams of polyurethanes.
The adsorption coefficients or a constant of the unimpregnated and activated carbon impregnated and activated carbon impregnated polyurethanes are set forth in the following Table I:

Table I

| EXP. NO. | FOAM TYPE | $\alpha$ CONSTANT |
|---|---|---|
| 1 | Hydrophilic Foam | 9.0 |
| 2 | Hydrophilic Foam with 20% by wgt carbon | 74.8 |
| 3 | Hydrophobic Foam (General Foam) | 62.6 |
| 4 | Hydrophobic Foam with 20% by wgt. carbon | 84.4 |

The Langmuir adsorption curves for the polyurethane foams without carbon were determined to by plotting C/Q versus C to determine N and $K_d$ values for the Langmuir adsorption. The results are set forth in the following Table II.

Table II

| Hydrophilic Polyurethane | | Hydrophobic Polyurethane | |
|---|---|---|---|
| C | Q | C | Q |
| 55 | 0.0006 | 62 | 0.0040 |
| 103 | 0.0015 | 121 | 0.0080 |
| 288 | 0.0029 | 291 | 0.0210 |
| 548 | 0.0058 | 615 | 0.0390 |
| 2192 | 0.0254 | 1426 | 0.0570 |
| 3174 | 0.0411 | 2770 | 0.1230 |
| 3884 | 0.0488 | 3984 | 0.2020 |

As shown in Table II, the hydrophobic polyurethane had higher Q value or amounts of adsorbed phenol.

Example 2

The following example shows the unexpected high performance of hydrophobic polyurethane foam with regard to hydrophilic polyurethane foam loaded with carbon and hydrophobic polyurethane foam loaded with carbon, shock loading of bioreactors with phenol. The supports were evaluated in glass columns of dimensions 64 cm height x 3.4 cm diameter. The columns were packed with foam blocks of approximately 1 cm$^3$ in size. Phenol containing water was pumped into the bottom of the column and exited from the top. Air was sparged from the bottom of the column using a ceramic sparging stone and exited the reactor from the top also. The flow rate of water through the reactors was such that the hydraulic residence time was 12 hours. Phenol levels in the effluent from the reactors was determined by colorimetric assay. The results are shown in the following Table III.

Table III

| Phenol Concentration (PPM) | | | | |
|---|---|---|---|---|
| Time days | Inlet Wastewater | Hydrophobic Polyurethane | Hydrophobic Polyurethane with Carbon | Hydrophilic Polyurethane with Carbon |
| 1 | 105 | 0.005 | 0.003 | 0.013 |
| 4 | 130 | 0.003 | 0.002 | 0.004 |
| 5 | 1100 | 228 | 278 | 113 |
| 6 | 1330 | 4 | 18 | 0.021 |
| 7 | 1210 | 0.009 | 0.008 | 0.005 |
| 8 | 1300 | 0.008 | 0.008 | 0.005 |
| 14 | 1160 | 0.121 | 19 | 0.189 |

The results from this study showed that the hydrophobic foam supports without impregnated carbon enabled the bioreactor to respond to shock loading of the reactor with relatively large amounts of phenol.

Example 3

Using the procedure of Example 1, the phenol adsorption capacity of conventional hydrophobic polyurethanes were compared to that of hydrophilic polyurethane. The hydrophilic polyurethane foam selected for evaluation was that used in Example 1 and identified as Foam A. The hydrophobic polyurethane selected for evaluation was that used in Example 1 and identified as Foam B, and FoamEx $F_x$SIF II (a polyol content of 75% by weight (approximately 40% by weight ethylene oxide and 60% by weight propylene oxide) and a toluene diisocyanate content of approximately 25 to 35% by weight of reactants from FoamEx Inc.

The results are set forth in the following Table IV:

Table IV

| Foam | Description | $\alpha$ - value |
|---|---|---|
| A | hydrophilic | 9 |
| B | hydrophobic | 28 |
| C | hydrophobic | 44 |

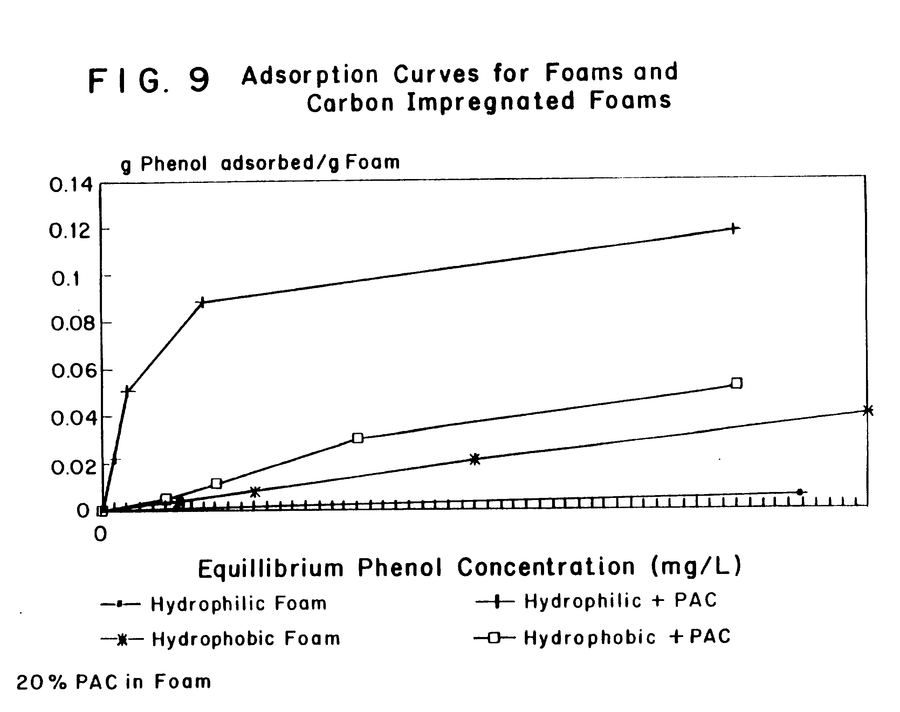

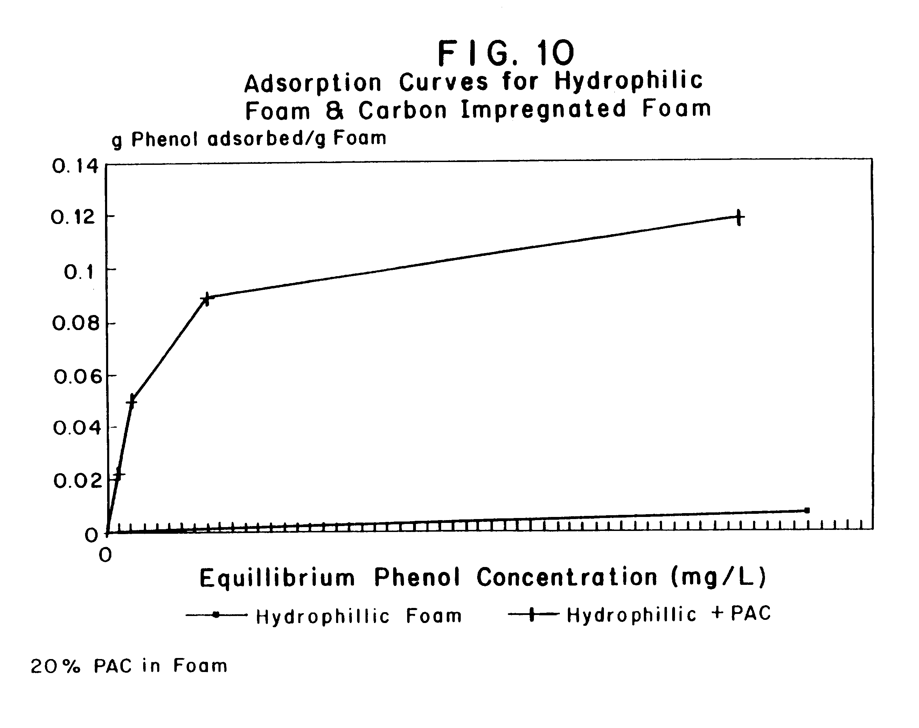

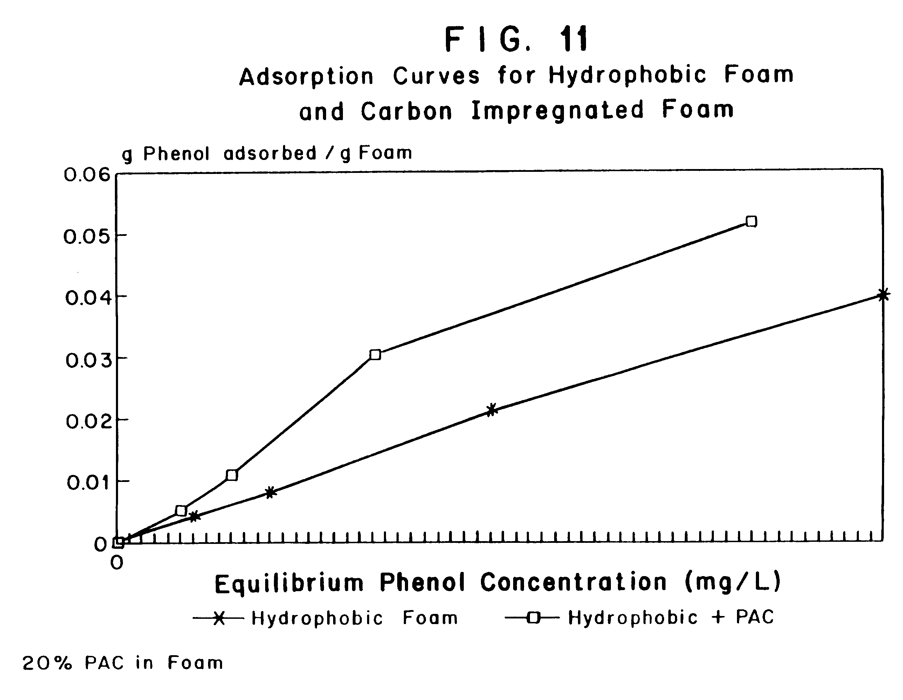

The chemical nature of the hydrophobic foams are different from that of the hydrophilic foam as shown in Figs. 9, 10 and 11. The polyol used in the hydrophilic foam is essentially all polyethylene oxide and has no alkyl chains. The polyol used in the hydrophobic polyurethane has significant amounts of polypropylene oxide which has significant amount of alkyl claims. This is one aspect that promotes the hydrophobicity of the foam. The other aspect which promotes hydrophobicity is the greater concentration of rigid aromatic segments used in the hydrophobic foam (polyisocyanate aromatics).

Example 4

Phenol Adsorption/Absorption by Synthetic polymers

A series of experiments were carried out to compare the adsorptive characterictic of hydrophobic polyurethane foam and hydrophilic polyurethane foam to that of other hydrophilic polymers. The hydrophobic polyurethane foams selected for evaluation were Foams B and C of Example 3 the other polymers selected fro evaluations were polypropylene, polyuthylene and nylon 6. In these experiments, one gram quantities of polymer fiber (1 - 2 mm diameter) or polyurethane foam were added to flasks containing 100 ml of an aqueous solution of 100 ppm concentration of phenol. The flasks were left to equilibrate for 24 hours after which the a value for phenol adsorption was determined. The results are set forth in the following Table V.

Table V

| Experiment No. | Polymer | α Value |
|---|---|---|
| 1 | Polypropylene | <1 |
| 2 | High Density Polyethylene | <1 |
| 3 | Nylon 6 | 3 |
| 4 | Hydrophilic Polyurethane Foam A | 9 |
| 5 | Hydrophobic Polyurethane Foam C | 44 |
| 6 | Hydrophobic Polyurethane Foam B | 38 |

The hydrophobic polyurethane foams have a greater capacity to remove phenol from solution than either the hydrophilic polyurethane or the other hydrophobic polymers such as polyethylene or polypropylene. Thus this characteristic appears to be characteristic of the hydrophobic polyurethanes only and is not a general feature of hydrophobic polymers.

Example 5

A series of experiments were carried out to evaluate the effect of carbon impregnation on the adsorptive capacity of a hydrophobic polyurethane, a hydrophilic polyurethane and high density poly ethylene, a hydrophobic polymer. The hydrophobic polyurethane foam selected for evaluation was Foam B of Example 3 and the hydrophilic polyurethane foam selected for evaluation was Foam A of Example 3. In these experiments, the polymers or prepolymers were embedded with 10% powdered activated carbon (PAC) prior to either extrusion or foaming. The constants for the carbon impregnated polymer was determined along with the polymer without carbon using the procedure of Example 1. The results are set forth in the following Table VI.

Table VI

| Experiment No. | Polymer | Constant |
|---|---|---|
| 1 | High Density Polyethylene (HDPE) | <1 |
| 2 | HDPE/Carbon | <1 |
| 3 | Foam A | 10 |
| 4 | Foam A/carbon | 75 |
| 5 | Foam B | 40 |
| 6 | Foam B/Carbon | 45 |

The hydrophobic polyurethane foam is not enhanced by impregnation with activated carbon, but the hydrophilic polyurethanes show significantly better phenol removal when impregnated with activated carbon. The hydrophobic polyethylene, however, showed no significantly enhanced ability to adsorb phenol when impregnated with activated carbon.

Thus the ability of the hydrophobic polyurethanes to adsorb phenol is an unexpected characteristic of this class of polymers.

**Claims**

1. A process for the removal of organic pollutants from waste water comprising passing an aqueous feed stream of said waste water containing one or more organic materials through a reactor in the presence of a gas comprising an effective amount of oxygen, said reactor containing a biologically active biomass comprising a plurality of biologically active particles comprising a substrate and aerobic microorganisms to provide an effluent stream in which the concentration of at least one of said materials is less than the concentration of said material in said feed stream, characterized in that said biologically active particles are hydrophobic particles comprising a hydrophobic polyurethane substrate in particulate form and an optional powdered activated carbon absorbent and an effective amount of one or more aerobic microorganisms capable of metabolizing at least one of said organic materials, being present on, in, or on and in, said substrate and/or said absorbent.

2. A process according to Claim 1 characterized in that the molar ratio of carbon and hydrogen atoms to oxygen and nitrogen atoms in the polymeric backbone is equal to or greater than 1.4.

3. A process according to Claim 2 characterized in that said ratio is equal or greater than 2.0.

4. A process according to Claim 2 characterized in that said ratio is equal to or greater than 2.5.

5. A process according to Claim 2 characterized in that said ratio is equal to or greater than 3.0.

6. A process according to any one of Claims 1 to 5 characterized in that polyurethane is derived from polymerization of an aromatic polyisocyanate and a poly(alkylene ether) glycol selected from the group consisting of poly(ethyleneether) glycol, poly(propylene ether) glycol, poly(propylene ether -co- ethylene ether) glycol or a mixture thereof.

7. A process according to Claim 6 characterized in that said diisocyanate is a toluene diisocyanate.

8. A process according to Claim 6 characterized in that the amount of aromatic diisocyanate is greater than 15% by weight, based on the total weight of the polyurethane, and the amount of poly(alkylene ether) is less than 80% by weight of the polyurethane, wherein at least 40% by weight of said poly(alkylene ether) is derived from propylene oxide.

9. A process according to Claim 8 characterized in that the aromatic diisocyanate contained in said polyurethane is at least 20% by weight of the polyurethane and said poly(alkylene ether) glycol contained in said polyurethane is at least 5% by weight of said polyurethane wherein at least 50% of said poly(alkylene ether) is derived from propylene oxide.

10. An apparatus for purification of waste water by aerobic biodegradation which comprises a reactor having an inlet for in flow of an aqueous influent stream containing one or more organic materials and an outlet for out flow of an effluent stream in which the concentration of at least one or said materials is less than the concentration of said material in said influent stream and having contained in said reactor a biologically active biomass characterized in that said biomass comprises a plurality of biologically active particles that are hydrophobic polyurethane particles comprising a hydrophobic polyurethane in particulate form having an effective amount of aerobic microorganisms capable of metabolizing at least one of said organic materials in , on, or on and in, said hydrophobic polyurethane particles in the absence of a carbon absorbent.

**Patentansprüche**

1. Verfahren zur Entfernung von organischen Schadstoffen aus Abwasser, bei dem man einen wäßrigen Einsatzstrom des ein oder mehrere organische Materialien enthaltenden Abwassers in Gegenwart eines Gases, das eine wirksame Menge Sauerstoff enthält, durch einen eine biologisch aktive Biomasse mit mehreren biologisch aktiven Teilchen mit einem Substrat und aeroben Mikroorganismen enthaltenden Reaktor leitet, wobei man einen Austragsstrom erhält, in dem die Konzentration mindestens eines der Materialien unter der Konzentration dieses Materials im Einsatzstrom liegt, dadurch gekennzeichnet, daß es sich bei den biologisch aktiven Teilchen um hydrophobe Teilchen handelt, die ein hydrophobes Polyurethansubstrat in Teilchenform, gegebenenfalls pulverförmige Aktivkohle als Absorptionsmittel und eine wirksame Menge eines oder mehrerer zur Metabolisierung von mindestens einem der organischen Materialien befähigter aerober Mikroorganismen, die sich auf, in oder auf und in dem Substrat und/oder dem Absorptionsmittel befinden, enthalten.

2. Verfahren nach Anspruch 1, dadurch gekennzeichnet, daß das Molverhältnis von Kohlenstoff- und Wasserstoffatomen zu Sauerstoff- und Stickstoffatomen in der Polymerhauptkette mindestens 1,4 beträgt.

3. Verfahren nach Anspruch 2, dadurch gekennzeichnet, daß das Verhältnis mindestens 2,0 beträgt.

4. Verfahren nach Anspruch 2, dadurch gekennzeichnet, daß das Verhältnis mindestens 2,5 beträgt.

5. Verfahren nach Anspruch 2, dadurch gekennzeichnet, daß das Verhältnis mindestens 3,0 beträgt.

**6.** Verfahren nach einem der Ansprüche 1 bis 5, dadurch gekennzeichnet, daß man ein Polyurethan einsetzt, das durch Polymerisation eines aromatischen Diisocyanats mit einem Poly(alkylenether)glykol aus der Gruppe bestehend aus Poly(ethylenether)glykol, Poly(propylenether)glykol, Poly(propylenether-co-ethylenether)glykol oder einer Mischung davon erhalten wird.

**7.** Verfahren nach Anspruch 6, dadurch gekennzeichnet, daß es sich bei dem Diisocyanat um ein Toluoldiisocyanat handelt.

**8.** Verfahren nach Anspruch 6, dadurch gekennzeichnet, daß die Menge an aromatischem Diisocyanat über 15 Gew.-%, bezogen auf das Gesamtgewicht des Polyurethans, und die Menge an Poly(alkylenether) unter 80 Gew.-%, bezogen auf das Polyurethan, beträgt, wobei mindestens 40 Gew.-% des Poly(alkylenethers) von Proplyenoxid abgeleitet sind.

**9.** Verfahren nach Anspruch 8, dadurch gekennzeichnet, daß die Menge an aromatischem Diisocyanat mindestens 20 Gew.-%, bezogen auf das Polyurethan, und die Menge an Poly(alkylenether)glykol mindestens 5 Gew.-%, bezogen auf das Polyurethan, beträgt, wobei mindestens 50 Gew.-% des Poly(alkylenethers) von Propylenoxid abgeleitet sind.

**10.** Vorrichtung zur Reinigung von Abwasser durch aeroben biologischen Abbau mit einem Reaktor mit einem Eingang für das Einströmen eines ein oder mehrere organische Materialien enthaltenden wäßrigen Eintragsstroms und einem Ausgang für das Ausströmen eines Austragsstroms, in dem die Konzentration mindestens eines der Materialien unter der Konzentration dieses Materials im Eintragsstrom liegt, und mit einer im Reaktor enthaltenen biologisch aktiven Biomasse, dadurch gekennzeichnet, daß die Biomasse mehrere biologisch aktive Teilchen enthält, bei denen es sich um hydrophobe Polyurethanteilchen handelt, die ein hydrophobes Polyurethan in Teilchenform mit einer wirksamen Menge von zur Metabolisierung von mindestens einem der organischen Materialien befähigten aeroben Mikroorganismen, die sich in, auf oder auf und in den hydrophoben Polyurethanteilchen befinden, enthalten, wobei kein Kohlenstoff-Absorptionsmittel zugegen ist.

## Revendications

**1.** Procédé d'élimination de polluants organiques d'eaux usées comprenant le passage d'un courant d'alimentation aqueux desdites eaux usées contenant une ou plusieurs matières organiques à travers un réacteur en présence d'un gaz comprenant une quantité efficace d'oxygène, ledit réacteur contenant une biomasse biologiquement active comprenant une pluralité de particules biologiquement actives comprenant un substrat et des micro-organismes aérobies pour procurer un courant effluent dans lequel la concentration en au moins l'une desdites matières est inférieure à la concentration de ladite matière dans ledit courant d'alimentation, caractérisé en ce que lesdites particules biologiquement actives sont des particules hydrophobes comprenant un substrat en polyuréthanne hydrophobe sous forme particulaire et un absorbant au charbon actif pulvérulent facultatif et une quantité efficace d'un ou de plusieurs micro-organismes aérobies capables de métaboliser au moins l'une desdites matières organiques présentes sur, dans, ou sur et dans ledit substrat et/ou ledit absorbant.

**2.** Procédé selon la revendication 1, caractérisé en ce que le rapport molaire entre les atomes de carbone et d'hydrogène et les atomes d'oxygène et d'azote dans le tronc polymère est supérieur ou égal à 1,4.

**3.** Procédé selon la revendication 2, caractérisé en ce que ledit rapport est supérieur ou égal à 2,0.

**4.** Procédé selon la revendication 2, caractérisé en ce que ledit rapport est supérieur ou égal à 2,5.

**5.** Procédé selon la revendication 2, caractérisé en ce que ledit rapport est supérieur ou égal à 3,0.

**6.** Procédé selon l'une quelconque des revendications 1 à 5, caractérisé en ce que le polyuréthanne est issu de la polymérisation d'un polyisocyanate aromatique et d'un poly(alkylène-éther)glycol choisi parmi le groupe constitué d'un poly(éthylène-éther)glycol, d'un poly(propylène-éther)glycol, d'un poly(propylène-éther-co-éthylène-éther) glycol ou d'un mélange de ceux-ci.

**7.** Procédé selon la revendication 6, caractérisé en ce que ledit diisocyanate est un diisocyanate de toluène.

**8.** Procédé selon la revendication 6, caractérisé en ce que la quantité de diisocyanate aromatique est supérieure à 15% en poids, par rapport au poids total du polyuréthanne, et la quantité de poly(alkylène-éther) est inférieure à 80% en poids du polyuréthanne, au moins 40% en poids dudit poly(alkylène-éther) étant issu d'oxyde de propylène.

**9.** Procédé selon la revendication 8, caractérisé en ce que le diisocyanate aromatique contenu dans ledit polyuréthanne constitue au moins 20% en poids du polyuréthanne et ledit poly(alkylène-éther)glycol contenu dans ledit polyuréthanne constitue au moins 5% en poids dudit polyuréthanne, au moins 50% dudit poly(alkylène-éther) étant issu d'oxyde de propylène.

**10.** Appareil de purification d'eaux usées par biodégradation aérobie, qui comprend un réacteur ayant une entrée pour l'arrivée d'un courant affluent aqueux contenant une ou plusieurs matières organiques et une sortie pour la décharge d'un courant effluent dans lequel la concentration en au moins l'une desdites matières est inférieure à la concentration de ladite matière dans ledit courant affluent et contenant, dans ledit réacteur, une biomasse biologiquement active, caractérisé en ce que ladite biomasse comprend une pluralité de particules biologiquement actives qui sont des particules de polyuréthanne hydrophobes comprenant un polyuréthanne hydrophobe sous forme particulaire ayant une quantité efficace de micro-organismes aérobies capables de métaboliser au moins l'une desdites matières organiques dans, sur, ou sur et dans lesdites particules de polyuréthanne hydrophobes en l'absence d'un absorbant au carbone.

# F I G. 1

# F I G. 2

# F I G. 3

# F I G. 4

# F I G. 5

# F I G. 6

# FIG. 7

# FIG. 8

## FIG. 9  Adsorption Curves for Foams and Carbon Impregnated Foams

g Phenol adsorbed/g Foam

Equillibrium Phenol Concentration (mg/L)

—•— Hydrophilic Foam        —+— Hydrophilic + PAC

—*— Hydrophobic Foam        —□— Hydrophobic + PAC

20% PAC in Foam

# F I G. 10
## Adsorption Curves for Hydrophilic Foam & Carbon Impregnated Foam

g Phenol adsorbed/g Foam

Equilibrium Phenol Concentration (mg/L)

——•—— Hydrophillic Foam        ——+—— Hydrophillic + PAC

20% PAC in Foam

EP 0 600 989 B1

# F I G. 11

## Adsorption Curves for Hydrophobic Foam
## and Carbon Impregnated Foam

g Phenol adsorbed / g Foam

**Equilibrium Phenol Concentration (mg/L)**

—✕— Hydrophobic Foam    —□— Hydrophobic + PAC

20% PAC in Foam

EP 0 600 989 B1

# FIG. 12

## CPMAS OF HYPOL FOAM

Rigid aromatic segments are
in low concentration in
Hypol foam.

Rigid segments of polyols of
Hypol foam.

ppm

# FIG. 13

## CPMAS OF GENERAL FOAM

Rigid aromatic segments are in
higher concentration in General foam.

Rigid segments of alkyl chains
in General foam

ppm

| 160.97 | 120.73 | 80.49 | 40.24 | -0.00 |

EP 0 600 989 B1

FIG. 14

PHENOL ADSORPTION ON CARBON/ HYPOL AND CARBON/GENERAL FOAM.

1-PULSE-MAS CARBON NMR SPECTRUM OF LABELED PHENOL ON HYPOL CARBON/ FOAM.

1-PULSE-MAS CARBON NMR SPECTRUM OF LABELED PHENOL ON GENERAL CARBON/ FOAM.